# EUROPÄISCHE PATENTANMELDUNG

(11) **EP 4 495 421 A2**
(43) Veröffentlichungstag der Anmeldung: **22.01.2025**
(21) Anmeldenummer: 24194231.7
(22) Anmeldetag: 02.10.2020
(51) Int. Cl.: F03D 13/20

(54) **FUNDAMENT FÜR EINE WINDKRAFTANLAGE**

(30) Priorität: 02.10.2019 DE 102019126558
(62) Teilanmeldung aus: 20796698.7
(71) Anmelder: Smart & Green Mukran Concrete GmbH, 18546 Sassnitz (DE)
(72) Erfinder: Prass, Gregor, 22455 Hamburg (DE); Schriefer, Christoph, 19230 Redefin (DE)
(74) Vertreter: Klickow & Wetzel PartGmbB

(57) **Zusammenfassung**

Die Erfindung betrifft ein Fundament (10) für eine Windkraftanlage im Wesentlichen aus Beton gegossenen, sockelartigen Abschnitt (11) mit wenigstens einem darin befindlichen und mit vor Ort eingegossenen Turmbefestigungselement (60), auf dem ein Turm der Windkraftanlage anordbar ist und mit denen der Turm der Windkraftanlage verbindbar ist, und einem zweiten sich im Wesentlichen horizontal erstreckenden Abschnitt (12) als flächiger Fundamentkörper, wobei der zweite Abschnitt (12) in Verbindung mit dem ersten Abschnitt (11) angeordnet ist, und wobei der zweite Abschnitt (12) des Fundament (10) im Wesentlichen wenigstens aus drei vorgefertigten Horizontalelementen (22), bevorzugt aus bewehrtem Beton. Dabei vorgesehen ist, dass die wenigstens drei Horizontalelemente (22) jeweils wenigstens einen Bodenabschnitt (23) mit einem sich im Wesentlichen vertikal darauf erstreckenden Versteifungselement (26) aufweisen, dass die Horizontalelemente (22) in Abhängigkeit von den Parametern des zu errichtenden Turmes, insbesondere dem Turmradius, anordbar sind, und dass zwischen den Horizontalelementen (22) jeweils ein Abstand (B) vorhanden ist.

## Beschreibung

Die Erfindung betrifft ein Fundament für eine Windkraftanlage mit einem ersten, am Errichtungsort im Wesentlichen aus Beton gegossenen, sockelartigen Abschnitt mit wenigstens einem darin befindlichen und mit vor Ort eingegossenen Turmbefestigungselement, auf dem ein Turm der Windkraftanlage anordbar ist und mit denen der Turm der Windkraftanlage verbindbar ist, und einem zweiten sich im Wesentlichen horizontal erstreckenden Abschnitt als flächiger Fundamentkörper, wobei der zweite Abschnitt in Verbindung mit dem ersten Abschnitt angeordnet ist, und wobei der zweite Abschnitt des Fundament im Wesentlichen wenigstens aus drei vorgefertigten Horizontalelementen, bevorzugt aus bewehrtem Beton. Weiterhin betrifft die Erfindung ein Verfahren zur Errichtung eines Fundaments für eine Windkraftanlage.

Fundamente für Windkraftanlagen werden im Wesentlichen als In-Situ-Betonfundamente ausgeführt. Dafür wird am Errichtungsort eine Grube ausgehoben, diese wird mit einer Sauberkeitsschicht versehen. Anschließend werden die Schalung und die Bewehrung errichtet und das Ganze mit Beton vor Ort gefüllt. Dabei wird ein flächiger Körper ggf. mit einem Sockel errichtet, siehe beispielsweise US 20160369520 A1. Neben dem Transportaufwand durch die Lieferung des Betons, der Schalung und der Bewehrung ist dieses vor Ort sehr arbeits- und zeitintensiv. Auch ist die Qualitätssicherung aufwendig bzw. je nach Witterung auch problembehaftet. Weiterhin ist der Rückbau nach dem Ende der Lebensdauer der Windkraftanlage teuer und sehr aufwendig.

Weiterhin gibt es prinzipiell Bedarf, Fundamente von Windkraftanlagen aus vorgefertigten Elementen zu errichten, womit die vorgenannten Probleme reduziert bzw. eliminiert werden könnten. Prinzipiell ist vorteilhaft, dass bei einem Vorfertigen die Bauteile unter definierten Bedingungen standardisiert produziert werden können. Auch reduziert sich der Arbeitsaufwand vor Ort. Hierfür wurden verschiedene Ansätze im Stand der Technik beschrieben.

Beispielsweise zeigt WO 2008/036934 A2 eine Kombination aus vorgefertigten Elementen und klassischem Schalungs-/Bewehrungsbau. EP 22563387 A1 offenbart ein Fundament für eine Windkraftanlage. Es wird aus vorgefertigten Betonteilen nach einer entsprechenden Anlieferung vor Ort ein Fundament errichtet. Es enthält einen flächigen Abschnitt und einen sockelartigen Abschnitt. Die Rippen weisen horizontal vorspringende Ankerelemente auf, die sich im montierten Zustand radial in das Zentrum des Fundaments erstrecken. Unterhalb und oberhalb der Anker sind Platten vorgesehen. In den so gebildeten Hohlraum wird der Ortbeton eingebracht, um die Anker miteinander zu verbinden und einen Zentralkörper zu bilden. Dadurch werden die zuvor genannten Nachteile nur unwesentlich reduziert.

Aufgabe der Erfindung ist daher, die vorgenannten Nachteile zu überwinden und Fundamente für Windkraftanlagen, insbesondere für Windkraftanlagen mit Betontürmen, aus vorgefertigten Elementen wirtschaftlich errichtbar zu machen.

Gelöst wird die erfindungsgemäße Aufgabe hinsichtlich des Fundaments dadurch, die wenigstens drei Horizontalelemente (22) jeweils wenigstens einen Bodenabschnitt mit einem sich im Wesentlichen vertikal darauf erstreckenden Versteifungselement aufweisen, dass die Horizontalelemente (22) in Abhängigkeit von den Parametern des zu errichtenden Turmes, insbesondere dem Turmradius, anordbar sind, und dass zwischen den Horizontalelementen jeweils ein Abstand vorhanden ist.

Hinsichtlich des Verfahrens wird die erfindungsgemäße Aufgabe gelöst durch die Schritte: Anordnen wenigstens eines Turmbefestigungselements in einem in einem Sockelabschnitt des Fundaments,
Anordnen von wenigstens drei im Wesentlichen aus Beton vorgefertigten Horizontalelementen radial um das Turmbefestigungselement, so dass jeweils wenigstens ein aus dem Horizontalelement austretendes Verbindungselement in den Sockelabschnitt hineinragt, wobei die Horizontalelemente so angeordnet werden, dass zwischen den Horizontalelementen jeweils ein Abstand vorhanden ist,
Einbringen von Bewehrungen in den Sockelabschnitt,
Errichten einer Schalung zur räumlichen Begrenzung des Sockelbereichs, und
Einbringen von Ortbeton in die Schalung.

Hierdurch lassen sich die vorgenannten Fundamente hinsichtlich Montage und Materialaufwand deutlich vereinfachen. Insbesondere ist es möglich, mit einem Horizontalelementtyp Fundamente für unterschiedliche Turmradien zu erstellen, indem die Horizontalelemente entsprechend parallel verschoben werden, wobei die Horizontalelemente baugleich bleiben.

Eine weitere Lehre der Erfindung sieht vor, dass der Abstand mit wenigstens einem Abdeckelement abgedeckt ist/wird. Es hat sich gezeigt, dass sich hierdurch auf einfache Weise eine Erhöhung der Auflast durch einbringen von Boden auf die Oberseite des Fundaments erreichen lässt.

Eine weitere Lehre der Erfindung sieht vor, dass der erste Abschnitt Bewehrungen aufweist, die vor Ort eingegossen sind. Diese sind bevorzugt wenigstens teilweise vorgefertigt. Hierdurch kann auf weinfache Weise ein Sockel hergestellt werden, der den notwendigen statischen Anforderungen genügt.

Eine weitere Lehre der Erfindung sieht vor, dass die wenigstens drei Horizontalelemente wenigstens ein Verbindungselement aufweisen, das aus ihrer zum ersten Abschnitt hin gewandten Seite austritt und im ersten Abschnitt vor Ort eingegossen ist. Hierdurch wird auf einfache Weise eine entsprechende einfache und sichere Verbindung der Horizontalelemente mit dem Sockel hergestellt werden.

Eine weitere Lehre der Erfindung sieht vor, dass es sich bei dem wenigstens einen Turmbefestigungselement um einen Ankerkorb handelt.

Nachfolgend wird die Erfindung anhand von Ausführungsbeispielen in Verbindung mit einer Zeichnung näher erläutert. Dabei zeigen:
- Fig. 1: eine seitliche Schnittansicht eines erfindungsgemäßen Fundaments,
- Fig. 2: eine räumliche Ansicht zu Fig. 1,
- Fig. 3: eine räumliche Darstellung eines Ankerkorbs, wie er in der Erfindung beispielhaft verwendet wird in Verbindung mit eine Anschlussflansches eines Turms einer Windkraftanlage,

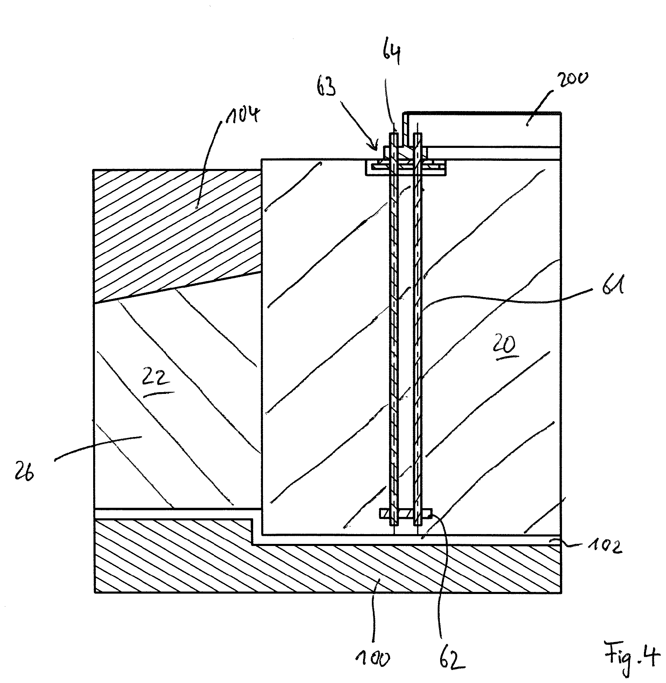

- Fig. 4: eine seitlich geschnittenen vergrößerte Ausschnittsansicht zu Fig. 1
- Fig. 5a bis 5e: Ansichten eines bevorzugten Ausführungsbeispiels eines erfindungsgemäßen Horizontalelements
- Fig. 6 a bis 6c: räumliche Ansichten von erfindungsgemäßen Abdeckelementen, und
- Fig. 7 a bis 7d: schematische Darstellungen von Anordnungsvarianten

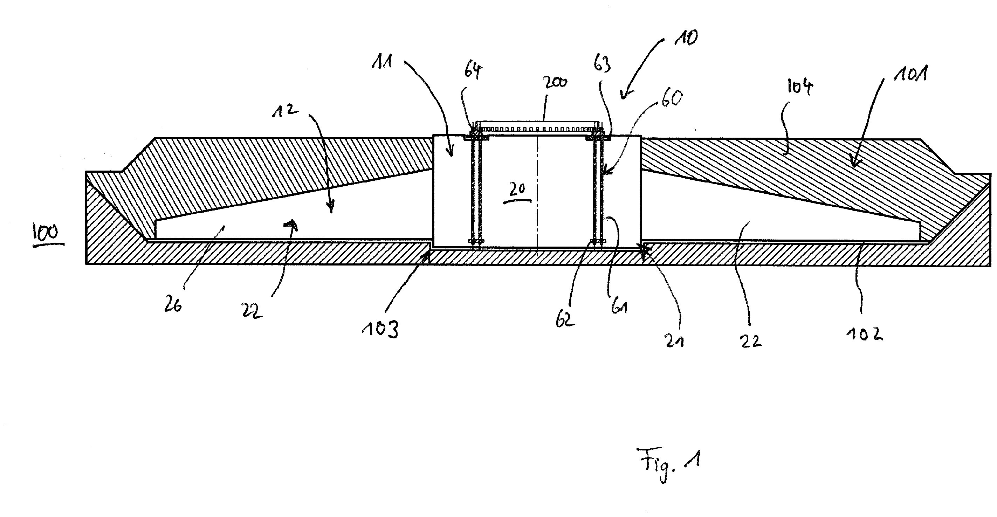

In Fig. 1 ist in geschnittener Ansicht in einer Grube 101 im Boden 100 auf einer Sauberkeitsschicht 102 eine bevorzugte Ausführungsform eines Fundaments 10 angeordnet. Sie weisen einen ersten sockelartigen Abschnitt 11 und einen zweiten flächigen aus Horizontalelementen 22 gebildeten Abschnitt 12 auf. Weiterhin kann auch ein dritter Abschnitt (nicht dargestellt) optional unter dem ersten Abschnitt 11 vorgesehen sein bzw. der erste Abschnitt über den zweiten Abschnitt nach unten erstreckend als Vorsprung 21, ausgeführt sein, die dann jeweils bevorzugt in einer Vertiefung 103 vorgesehen wären.

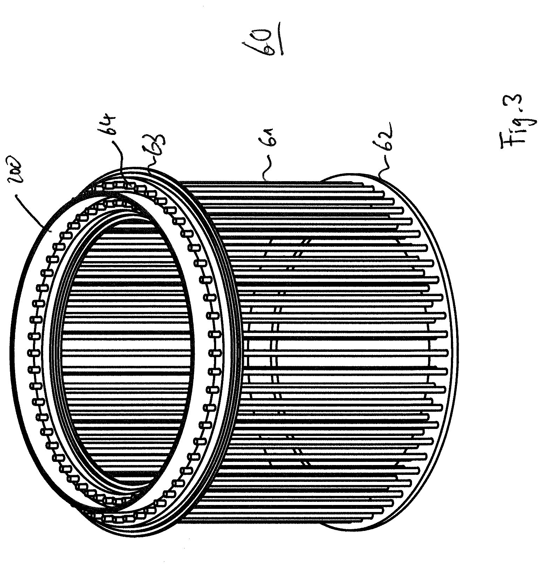

Der erste Abschnitt 11 ist als Sockel 20 ausgeführt. Im Sockel 20 sind als Turmbefestigungselement ein Ankerkorb 60, siehe Figur 3, sowie Bewehrungen (nicht dargestellt). Der Ankerkorb 60 als ein Beispiel für ein Turmbefestigungselement setzt sich aus vertikalen Stäben 61 und jeweils unten und oben angeordneten Ringen 62, 63 zusammen, die fest miteinander verbunden sind. Der obere Ring 63 mit den überstehenden Stababschnitten 64 ragt aus dem Beton des Sockels 20 heraus. Mit diesem Teil des Ankerkorbs wird beispielsweise der Anschlussflansch 200 des Turm der Windkraftanlage verbunden, beispielsweise mittels Verschraubungen.

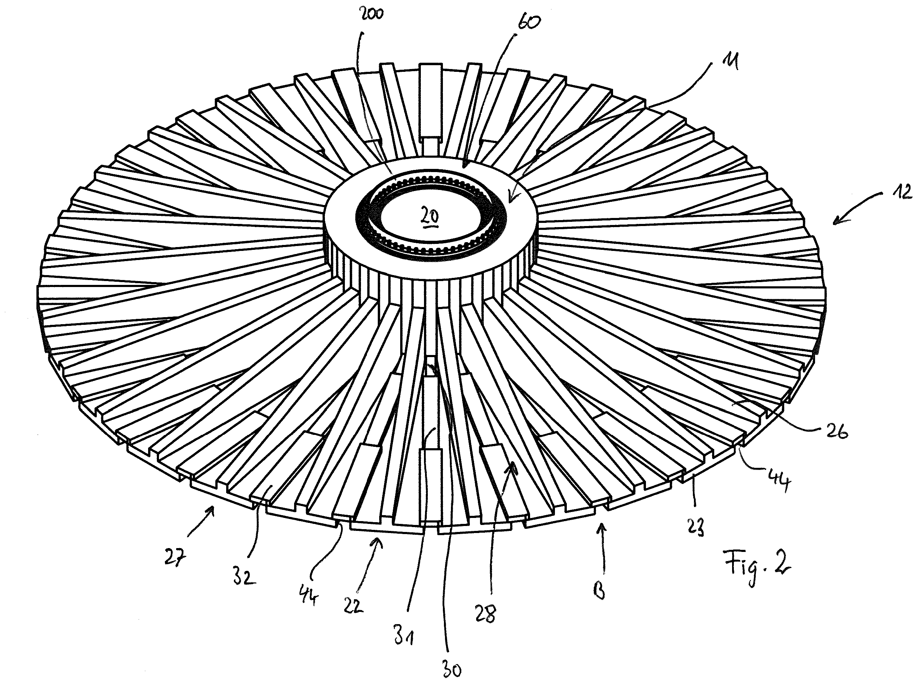

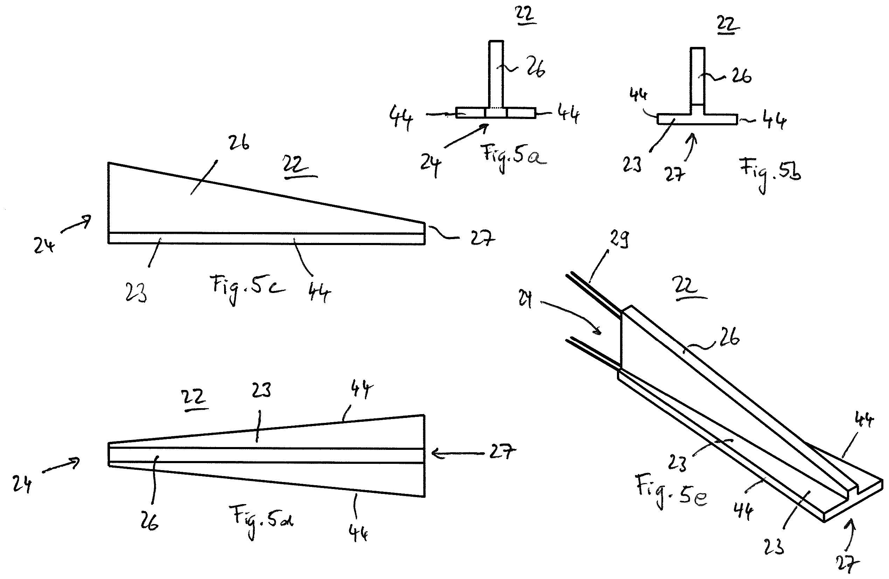

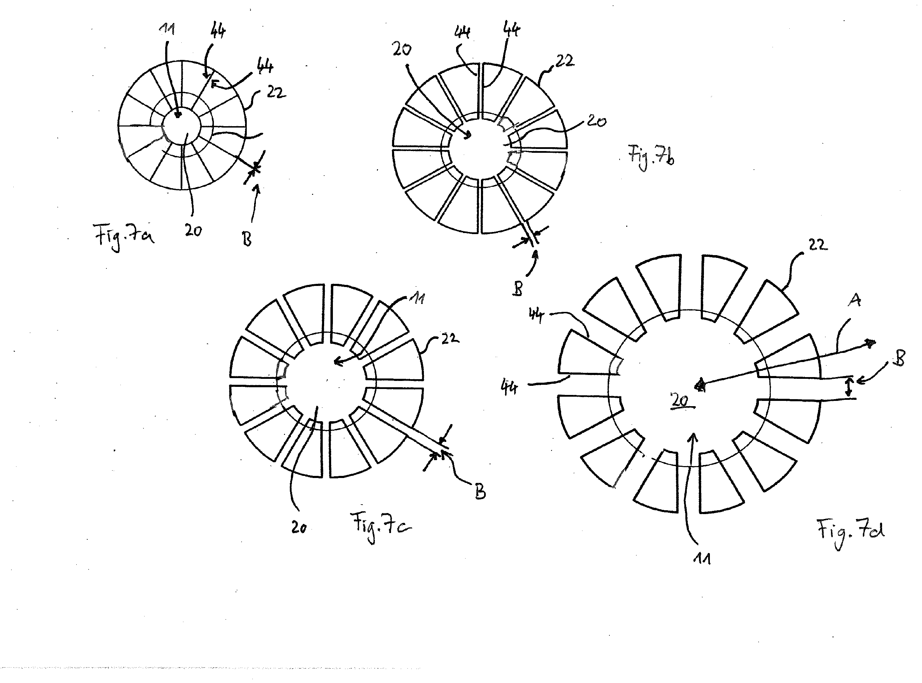

Der zweite Abschnitt 12 ist flächig ausgeführt. Alternativ kann er aber auch eine sternform realisiert werden. Fig.2 zeigt eine räumliche Ansicht des Fundaments 10. Der zweite Abschnitt 12 ist aus Horizontalelementen 22 in Form von Rippenelementen ausgeführt. Diese sind in den Fig. 5a bis 5e dargestellt. Diese erstrecken sich vom Sockel 20 aus gesehen radial nach außen. Sie weisen eine Grundplatte 23 auf, die beispielsweise trapezförmig ausgeführt ist, so dass alle zusammengesetzten Grundplatten eine polygonale Fläche bilden (siehe Fig. 2), die sich einer Kreisform annähert. Alternativ sind auch Kreissegmente (siehe Fig. 7a bis 7d) oder eine Mischform aus Kreissegment und Trapezform möglich. Zwischen Seitenwänden 44 der Grundplatten 23 sind Abstände B vorgesehen, die vom Durchmesser des zu errichtenden Turms abhängig sind.

Rechtwinklig auf der Grundplatte 23 ist eine Versteifungswand 26 angeordnet, deren Höhe beispielsweise hin vom inneren Ende 24 hin zum äußeren Ende 27 der Grundplatte 23 abnimmt. Zwischen zwei benachbarten Versteifungswänden 26 bildet sich ein nach oben offener Hohlraum 28, in den Aufschüttboden 104 einbringbar ist, wodurch eine Auflast auf den zweiten Abschnitt 12 des Fundaments 10 aufbringbar ist.

Am inneren Ende 24 des Horizontalelements sind Verbindungselemente 29 hier bevorzugt in Form von Bewehrungsstäben vorgesehen, die aus der Grundplatte und/oder aus der Versteifungswand 24 austreten und im montierten Zustand in den Sockel beispielsweise in Richtung des Ankerkorbs, hineinragen und mit dem Beton des Sockels 20 eine haltende Verbindung eingehen.

Bevorzugt werden die Abstände B durch Abdeckplatten 30, 31, 32 abgedeckt um eine quasi durchgehende Fläche unterhalb des Hohlraums 28 zu erreichen. Hierdurch wird die Auflastwirkung des Bodens 104 verstärkt.

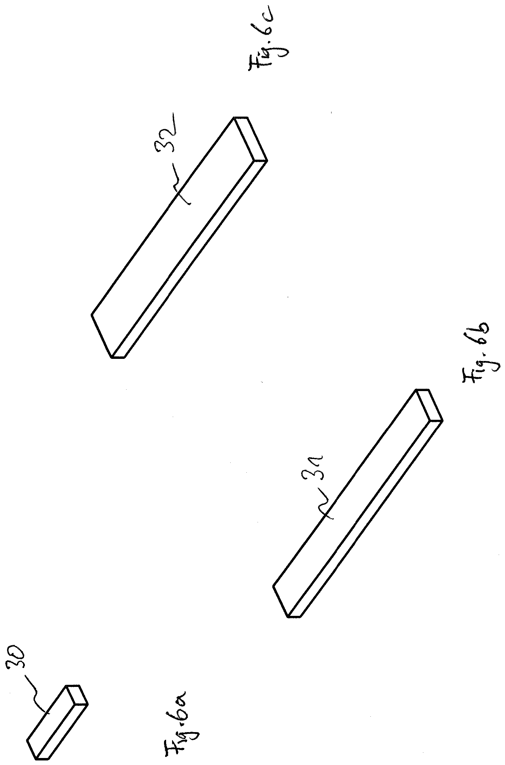

Wie in Fig. 7a bis 7d schematisch dargestellt ist, ist es möglich mit ein und demselben Horizontalelement 22 einen zweiten Abschnitt 12 zu bilden, der unterschiedlich große Sockel 20 aufweist, indem die Horizontalelemente 22 entlang eines vom Mittelpunkt ausgehenden Strahls nach innen oder nach außen verschoben werden, wie dieses in Fig. 7d durch einen Doppelpfeil A dargestellt ist. Nach innen wird dieses dadurch begrenzt, dass sich die Seitenflächen 44 der Grundplatten 23 der Horizontalelemente 22 berühren. Nach außen ist dieses abhängig vom Radius des zu errichtenden Turms (nicht dargestellt) und damit auch dem Radius des Ankerkorbs. Ein Abstand B ist bevorzugt über die gesamte Länge der Seitenflächen 44 vom inneren Ende 24 zum äußeren Ende 27 hin gleich, so dass zwei Seitenflächen 44 parallel zueinander angeordnet sind. Hierdurch können auf einfache Weise bevorzugt mit einem einzigen Horizontalelement 22 Fundamente für Türme mit unterschiedlichen Durchmessern errichtet werden. Der Hohlraum 28 wird dann durch die Abdeckplatten 30, 31, 32 (siehe Fig. 6a -6c) abgedeckt.

Das Fundaments 10 wird errichtet in einer Baugrube 100 beispielsweise auf einer Sauberkeitsschicht 102, indem wenigstens eine Turmbefestigungselement / Ankerkorb 60 im Sockelabschnitt 11 des Fundaments 10 angeordnet wird. Die Horizontalelemente 22 werden radial um das Turmbefestigungselement 60 herum angeordnet, dass jeweils wenigstens ein aus dem Horizontalelement 22 austretendes Verbindungselement 29 in den Sockelabschnitt 11 bzw. das Turmbefestigungselement 60 hineinragt, wobei die Horizontalelemente 22 so angeordnet werden, dass zwischen den Horizontalelementen 22 jeweils ein Abstand B vorhanden ist. Weiterhin werden in den Sockelabschnitt 11 Bewehrungen eingebracht. Diese können beispielsweise bereits vorproduziert sein und als Elemente (nicht dargestellt) eingebracht werden. Weiterhin wird eine Schalung vorgesehen, die den Sockelabschnitt räumlich begrenzt. In diesen Raum wird dann der Ortbeton in die Schalung eingebracht. Die Abstände B werden mit Abdeckelementen 30, 31, 32 zum Hohlraum 28 hin geschlossen. Nach Aushärten des Betons wird beispielsweise die Schalung entfernt. In den Hohlraum 28 wird dann Aufschüttboden 104 als Auflast eingebracht. Anschließend kann der Turm der Windkraftanlage auf dem Sockel 20 in Verbindung mit dem Turmbefestigungselement 60 errichtet werden.

### Bezugszeichenliste

| | | | |
|---|---|---|---|
| 10 | Fundament | | |
| 11 | erster Abschnitt /Sockelabschnitt | A | Verschieberichtung |
| 12 | zweiter Abschnitt | B | Abstand |
| 20 | Sockel | | |
| 21 | Vertiefung | | |
| 22 | Horizontalelement/ Rippenelement | | |
| 23 | Grundplatte | | |
| 24 | Inneres Ende | | |
| 26 | Versteifungswand | | |
| 27 | äußeres Ende | | |
| 28 | Hohlraum | | |
| 29 | Verbindungselement | | |
| 30 | Abdeckplatte | | |
| 31 | Abdeckplatte | | |
| 32 | Abdeckplatte | | |
| 44 | Seitenfläche | | |
| 60 | Ankerkorb | | |
| 61 | Stab | | |
| 62 | unterer Ring | | |
| 63 | oberer Ring | | |
| 64 | Stabende | | |
| 100 | Boden | | |
| 101 | Baugrube | | |
| 102 | Sauberkeitsschicht | | |
| 104 | Aufschüttboden | | |
| 200 | Anschlussflansch | | |

## Patentansprüche

1. Fundament für eine Windkraftanlage mit einem ersten, am Errichtungsort im Wesentlichen aus Beton gegossenen, sockelartigen Abschnitt (11) mit wenigstens einem darin befindlichen und mit vor Ort eingegossenen Turmbefestigungselement (60), auf dem ein Turm der Windkraftanlage anordbar ist und mit denen der Turm der Windkraftanlage verbindbar ist, und einem zweiten sich im Wesentlichen horizontal erstreckenden Abschnitt (12) als flächiger Fundamentkörper, wobei der zweite Abschnitt (12) in Verbindung mit dem ersten Abschnitt (11) angeordnet ist, und wobei der zweite Abschnitt (12) des Fundament (10) im Wesentlichen wenigstens aus drei vorgefertigten Horizontalelementen (22), bevorzugt aus bewehrtem Beton, **dadurch gekennzeichnet, dass** die wenigstens drei Horizontalelemente (22) jeweils wenigstens einen Bodenabschnitt (23) mit einem sich im Wesentlichen vertikal darauf erstreckenden Versteifungselement (26) aufweisen, dass die Horizontalelemente (22) in Abhängigkeit von den Parametern des zu errichtenden Turmes, insbesondere dem Turmradius, anordbar sind, und dass zwischen den Horizontalelementen (22) jeweils ein Abstand (B) vorhanden ist.

2. Fundament nach Anspruch 1, **dadurch gekennzeichnet, dass** der Abstand (B) mit wenigstens einem Abdeckelement (30, 31, 32) abgedeckt ist.

3. Fundament nach Anspruch 1 oder 2, **dadurch gekennzeichnet, dass** der erste Abschnitt (11) Bewehrungen aufweist, die vor Ort eingegossen sind, wobei die Bewehrungen bevorzugt wenigstens teilweise vorgefertigt sind.

4. Fundament nach einem der Ansprüche 1 bis 3, **dadurch gekennzeichnet, dass** die wenigstens drei Horizontalelemente (22) wenigstens ein Verbindungselement (29) aufweisen, das aus ihrer zum ersten Abschnitt (12) hin gewandten Seite austritt und im ersten Abschnitt (11) vor Ort eingegossen ist.

5. Fundament nach einem der Ansprüche 1 bis 4, **dadurch gekennzeichnet, dass** es sich bei dem wenigstens einen Turmbefestigungselement um einen Ankerkorb (60) handelt.

6. Verfahren zum Herstellen eines Fundaments für eine Windkraftanlage, insbesondere nach einem der Ansprüche 1 bis 5, mit den Schritten:
Anordnen wenigstens eines Turmbefestigungselements (60) in einem in einem Sockelabschnitt (11) des Fundaments (10),
Anordnen von wenigstens drei im Wesentlichen aus Beton vorgefertigten Horizontalelementen (22) radial um das Turmbefestigungselement (60), so dass jeweils wenigstens ein aus dem Horizontalelement (22) austretendes Verbindungselement (29) in den Sockelabschnitt (11) hineinragt, wobei die Horizontalelemente (22) so angeordnet werden, dass zwischen den Horizontalelementen (22) jeweils ein Abstand (B) vorhanden ist,
Einbringen von Bewehrungen in den Sockelabschnitt (11),
Errichten einer Schalung zur räumlichen Begrenzung des Sockelabschnitts (11), und
Einbringen von Ortbeton in die Schalung.

7. Verfahren nach Anspruch 6, **dadurch gekennzeichnet, dass** es sich bei dem wenigstens einen Turmbefestigungselement um einen Ankerkorb (60) handelt.

8. Verfahren nach Anspruch 6 oder 7, **dadurch gekennzeichnet, dass** der Abstand mit wenigstens einem Abdeckelement (30, 31, 32) abgedeckt wird.
